# FASCICULE DE BREVET EUROPEEN

(11) **EP 2 729 984 B1**
(45) Date de publication et mention de la délivrance du brevet: **24.02.2016**
(21) Numéro de dépôt: 12744029.5
(22) Date de dépôt: 02.07.2012
(51) Int. Cl.: H01M 10/054, H01M 4/485, H01M 4/13, H01M 4/131, H01M 4/1391

(54) **MATIÈRE ACTIVE D'ÉLECTRODE POUR UNE BATTERIE AUX IONS SODIUM**
WIRKSTOFF FÜR ELEKTRODE FÜR EINE NATRIUMIONENBATTERIE
ACTIVE SUBSTANCE FOR ELECTRODE FOR A SODIUM ION BATTERY

(30) Priorité: 04.07.2011 FR 1156007
(43) Date de publication de la demande: 14.05.2014
(73) Titulaire: Université de Picardie Jules Verne, 80039 Amiens (FR); Centre National de la Recherche Scientifique, 75016 Paris (FR); Agencia Estalal Consejo Superior de Investigaciones Cientificas, 28006 Madrid (ES)
(72) Inventeur: SENGUTTUVAN, Premkumar, 80080 Amiens (FR); PALACIN, Rosa, 08901 L'Hospitalet de Llobregat (ES); TARASCON, Jean-Marie, 91540 Mennecy (FR)
(74) Mandataire: Goulard, Sophie
(86) Numéro de dépôt international: PCT/FR2012/051518
(87) Numéro de publication internationale: WO 2013/004957

(56) Documents cités:
- EP-A1- 2 216 298
- US-A1- 2009 253 025
- US-A1- 2010 266 900
- K. CHIBA ET AL.: "Synthesis, structure and electrochemical Li-ion intercalation properties of Li2Ti3O7 with Na2Ti3O7-type layered structure", SOLID STATE IONICS, vol. 178 (2008), 2008, pages 1725-1730, XP002667268, cité dans la demande

## Description

La présente invention concerne un matériau d'électrode négative pour une batterie aux ions sodium, ainsi qu'un procédé pour sa préparation.

### L'ARRIERE-PLAN TECHNOLOGIQUE

Les batteries au lithium ont fait l'objet de nombreux travaux, en raison de leurs multiples utilisations et de leurs performances. Cependant, leur avenir risque d'être compromis, du fait que la ressource naturelle en lithium est limitée.

Certaines propriétés du sodium sont similaires à celles du lithium, et son utilisation en tant que solution alternative dans les batteries a été étudiée.

Il est connu d'utiliser le sodium dans des batteries Na/S qui fonctionnent à température élevée pour du stockage de l'ordre du mégawatt MW. On connaît également les systèmes Na/NiCl₂ pour les véhicules électriques. Mais ces deux types de batteries ne fonctionnent que dans un domaine de températures élevées (de l'ordre de 270-300°C), où elles bénéficient de la conductivité élevée des céramiques β-alumine.

D'autres tentatives ont été faites pour l'élaboration de batteries dans lesquelles l'électrode négative est une électrode de sodium métal et l'électrode positive est un matériau d'insertion d'ions sodium. On peut citer par exemple, les batteries à électrolyte liquide dont l'électrode positive est constituée par TiS₂ ou un oxyde de métal de transition ayant un potentiel d'oxydation élevé, tel que par exemple NaₓMO₂, M étant Mn ou Co. On peut citer également les batteries fonctionnant par circulation d'ions sodium entre une électrode négative constituée par du carbone et une électrode positive constituée par un phosphate de sodium et d'un métal de transition (US-2002-0192553). Cependant, la capacité des batteries qui fonctionnent par circulation d'ions sodium dans l'électrolyte et dont l'électrode négative est un carbone n'est pas stable dans le temps et elle diminue rapidement au cours de cycles successifs.

On connaît le composé Na₂Ti₃O₇ et sa capacité à insérer des ions lithium de manière réversible, sans que la structure cristallographique ne soit dégradée [K. Chiba, et al, Solid State Ionics, 178 (2008)1725-1730]. Il est noté cependant que la capacité réversible du matériau Na₂Ti₃O₇ est nettement plus faible que celle du matériau lithié Li₂Ti₃O₇ ayant la même structure.

### LA PRESENTE INVENTION

Le but de la présente invention est de fournir une batterie qui fonctionne par circulation d'ions sodium dans un électrolyte qui contient un sel de sodium et qui est placé entre deux électrodes dans lesquelles les ions sodium peuvent s'insérer de manière réversible.

Ce but est atteint par une nouvelle matière active pour une électrode négative, capable d'insérer les ions sodium de manière réversible à un potentiel plus faible que celui des batteries aux ions sodium décrites dans l'art antérieur. L'amélioration de la capacité spécifique rend la batterie de l'invention intéressante par rapport aux batteries aux ions lithium, dans le contexte de faibles ressources en lithium.

Les inventeurs ont trouvé que, de manière surprenante, l'insertion d'ions Na⁺ dans un matériau à structure lamellaire dérivé de l'oxyde Na₂Ti₃O₇ produit un matériau capable de fonctionner avec de bonnes performances en tant que matière active de l'électrode négative d'une batterie aux ions sodium.

La présente invention a pour objet une nouvelle matière active d'électrode, une électrode qui contient ladite matière active, un procédé de préparation de l'électrode, ainsi qu'une batterie aux ions sodium dont l'électrode négative est une électrode selon l'invention.

La matière active d'électrode selon l'invention est un oxyde de Na et de Ti dont la structure correspond à la structure en feuillets du composé Na₂Ti₃O₇, ledit oxyde répondant à la formule NaₓTi(IV)ₐTi(III)_{b}M_{c}O₇ (A) dans laquelle :
- x désigne le nombre d'ions Na⁺ insérés entres les feuillets, par unité structurale Ti₃O₇, 0<x≤5
- Ti(IV) et Ti(III) représentent du titane respectivement au degré d'oxydation IV et III ;
- M représente un ou plusieurs éléments choisis parmi les métaux de transition 3d et les métaux de transition 4d ;
- les valeurs de x, a, b et c sont telles que le composé est électroniquement neutre compte tenu du degré d'oxydation du ou des éléments représentés par M;
- le rapport (a+b)/c est supérieur à 0,5.

Parmi les métaux 3d, on peut citer V, Cr et Mn. Parmi les métaux 4d on peut citer Nb et Mo. On préfère tout particulièrement Nb et V.

Dans l'oxyde (A) l'électroneutralité correspond aux conditions suivantes : a+b+c=3, x+4a+3b+mc = 14, m étant la moyenne pondérée des degrés d'oxydation différents du même élément M ou des degrés d'oxydation de différents éléments M.

Un oxyde (A) dans lequel c=0 correspond, à l'état partiellement réduit, à la formule NaₓTi(IV)ₐTi(III)_{b}O₇, avec 2<x≤5, a+b=3, x+4a+3b = 14. A l'état totalement réduit, il correspond à la formule Na₅Ti(III)₃O₇.

Un oxyde (A) dans lequel M est Nb correspond à la formule NaₓTi(IV)ₐTi(III)_{b}Nb_{c}O₇, avec 0<x<5, a+b+c=3, x+4a+3b+mc = 14, m étant la moyenne pondérée des degrés d'oxydation Nb(V) et Nb(IV). A l'état totalement réduit, a=0 et l'oxyde (A) correspond à la formule NaₓTi(III)_{b}Nb(IV)_{c}O₇, avec x=14-(3b+4c).

Un oxyde (A) dans lequel M est V correspond à la formule NaₓTi(IV)ₐTi(III)_{b}V_{c}O₇, avec 0<x≤5, a+b+c=3, x+4a+3b+mc = 14, m étant la moyenne pondérée des degrés d'oxydation V(V) et V(III). A l'état totalement réduit, a=0 et l'oxyde (A) correspond à la formule NaₓTi(III)_{b}V(III)_{c}O₇, avec x=14-3(b+c).

Une matière active constituée par un oxyde de Na et Ti de formule (A) selon l'invention est désignée ci-après par NxTMO. Parmi les oxydes NxTMO, NaₓTi(IV)ₐTi(III)_{b}O₇ est particulièrement préféré.

Une électrode selon l'invention est constituée par un collecteur de courant qui porte un matériau d'électrode qui comprend ladite matière active NxTMO.

Dans un mode de réalisation préféré, le matériau de l'électrode comprend en outre un agent de conductivité électronique, ou un liant ou les deux.

L'agent de conductivité électronique peut être un noir de carbone, un noir d'acétylène, du graphite naturel ou synthétique, des nanotubes de carbone....

Le liant est de préférence un polymère qui a un module d'élasticité élevé (de l'ordre de plusieurs centaines de MPa), et qui est stable dans les conditions de température et de voltage dans lesquelles l'électrode est destinée à fonctionner. A titre d'exemples, on peut citer les polymères fluorés [tels qu'un poly(fluorure de vinyle) ou un poly(tétrafluorure d'éthylène)], les carboxyméthylcelluloses (CMC), les copolymères d'éthylène et de propylène, ou un mélange d'au moins deux de ces polymères.

Le matériau d'électrode comprend de préférence :
- au moins 60 % en poids de NxTMO ;
- de 0 à 30% en poids d'agent de conductivité électronique ;
- de 0 à 30% en poids de liant polymère.

Lorsque le matériau d'électrode contient un liant polymère, il est sous forme d'un film porté par un collecteur de courant.

Lorsque le matériau d'électrode ne contient pas de liant, il est sous forme d'une couche de poudre compactée portée par un collecteur de courant.

Le collecteur de courant est constitué par un matériau conducteur, en particulier par un matériau métallique qui peut être choisi par exemple parmi le cuivre, l'aluminium, un acier, et le fer.

Le matériau d'électrode a de préférence une épaisseur entre 100 et 300 µm.

Dans un mode de réalisation particulièrement préféré, la matière active de l'électrode est NaₓTi(IV)ₐTi(III)_{b}O₇.

La matière active d'électrode NaₓTi(IV)ₐTi(III)_{b}M_{c}O₇ (NxTMO) peut être préparée par voie électrochimique, à partir de l'oxyde précurseur dont la structure correspond à la structure en feuillets du composé Na₂Ti₃O₇ et qui répond à la formule Na_{x'}Ti(IV)ₐ'M_{c}O₇(B), dans laquelle :
- x' désigne le nombre d'ions Na⁺ insérés entres les feuillets, par unité structurale Ti₃O₇ 0<x'≤2 ;
- Ti(IV) représente du titane au degré d'oxydation IV ;
- M représente un ou plusieurs éléments choisis parmi les métaux de transition 3d et les métaux de transition 4d ;
- a'=a+b ;
- les valeurs de x', a' et c sont telles que le composé est électroniquement neutre compte tenu du degré d'oxydation du ou des éléments représentés par M;
- le rapport a'/c est supérieur à 0,5.

Dans l'oxyde (B) l'électroneutralité correspond aux conditions suivantes : a'+c=3, x'+4a'+m'c = 14, m' étant le degré d'oxydation d'un élément M unique ou la moyenne pondérée des degrés d'oxydation de différents éléments M.

Un oxyde précurseur (B) dans lequel c=0 correspond à Na₂Ti(TV)ₐO₇. Un oxyde précurseur (B) dans lequel M est Nb correspond à la formule Na_{x'}Ti(IV)_{a'}Nb_{c}O₇, avec 0<x'≤2, a'+c =3, x'+4a'+5c = 14, le degré d'oxydation de Nb étant V. Un oxyde précurseur (B) dans lequel M est V correspond à la formule Na₂Ti(IV)_{3-c}V_{c}O₇, avec x'+4a'+4c = 14, le degré d'oxydation de V étant IV.

Un oxyde précurseur (B) peut être préparé par traitement thermique d'un mélange de précurseurs sous forme de poudre. Les précurseurs peuvent être mélangés soit par un procédé chimique à basse température (par exemple par dissolution/précipitation), soit par broyage mécanique (par exemple dans un broyeur à billes), de manière à obtenir un mélange de précurseurs à l'échelle atomique. Le traitement thermique peut être effectué par exemple, à une température entre 700° et 1000°C, pendant une durée de 20 à 40 heures. La détermination des conditions appropriées à un oxyde précurseur (B) particulier est à la portée de l'homme de métier. Les quantités des précurseurs sont choisies en fonction de la stoechiométrie de l'oxyde précurseur (B) souhaité. Par exemple, un oxyde (B) dans lequel c'=0 peut être obtenu par broyage des quantités appropriées de TiO₂ et de Na₂CO₃. Pour l'obtention d'un oxyde précurseur (B) dans lequel c'#0, on ajoute au mélange TiO₂ et de Na₂CO₃, un précurseur de M, par exemple V₂O₅ si M est V ou Nb₂O₅ si M est Nb.

Il est particulièrement avantageux de préparer ladite matière active NxTMO sur un support qui servira de collecteur de courant pour l'électrode. Dans ce mode de réalisation, le procédé de préparation de la matière active comprend les étapes suivantes :
- dépôt de l'oxyde précurseur (B) sur un collecteur de courant pour former une électrode de travail ;
- élaboration d'une contre-électrode comprenant un matériau capable de libérer des ions Na⁺ ;
- assemblage de l'électrode et de la contre-électrode pour former une cellule électrochimique dans laquelle l'électrolyte est une solution d'un sel de sodium ;
- application d'un courant réducteur à l'électrode de travail.

Le matériau déposé sur le collecteur de courant de l'électrode de travail contient l'oxyde précurseur (B), éventuellement un agent de conduction électronique et/ou éventuellement un liant

La présence de l'agent de conduction électronique est préférée, dans la mesure où elle permet une meilleure utilisation de l'électrode.

En l'absence de liant, le matériau de l'électrode de travail est préparé à partir d'une poudre d'oxyde précurseur (B), de préférence sous forme d'un mélange avec une poudre d'un agent de conduction électronique. La poudre d'oxyde précurseur (B) ou le mélange de poudres est compacté et déposé sur un collecteur de courant, de préférence avec une épaisseur de 100 à 300 µm.

La composition utilisée pour l'élaboration d'une électrode de travail sans liant contient de préférence :
- au moins 60% en poids d'oxyde précurseur (B);
- de 0 à 40 % en poids d'agent de conductivité électronique.

Lorsque le matériau de l'électrode de travail contient un liant polymère, il est avantageux de préparer une composition contenant l'oxyde (B), le liant, un solvant volatil, et éventuellement un agent de conduction ionique, d'appliquer ladite composition sur un collecteur de courant, et d'éliminer le solvant volatil par séchage. Le solvant volatil peut être choisi par exemple parmi l'acétone, le tétrahydrofurane, le diéthyléther, l'hexane, et la N-méthylpyrrolidone.

La composition utilisée pour l'élaboration d'une électrode de travail avec un liant contient de préférence :
- au moins 50% en poids d'oxyde précurseur (B);
- de 0 à 25. % en poids d'agent de conductivité électronique ;
- de 0 à 25% en poids de liant polymère ;
- de 0 à 30% en poids de solvant.

Il est avantageux de préparer un film de matériau pour l'électrode de travail en déposant la composition sur un support en verre, et de prélever le film formé après séchage, pour le déposer sur un collecteur de courant.

Le collecteur de courant de l'électrode de travail est constitué par un matériau conducteur, en particulier par un matériau métallique qui peut être choisi par exemple parmi le cuivre, l'aluminium, un acier, et le fer.

Lorsque l'électrode de travail utilisée pour l'élaboration de la matière active NxTMO porte un matériau comprenant l'oxyde précurseur (B), un liant et/ou un agent de conduction électronique, la matière active d'électrode selon l'invention est obtenue sous forme d'un matériau composite, contenant la matière active NxTMO, un liant et/ou un agent de conduction électronique.

L'électrolyte de la cellule électrochimique utilisée pour l'élaboration de la matière active NxTMO est une solution d'un sel de sodium dans un solvant. Le solvant peut être un solvant liquide, éventuellement gélifié par un polymère, ou un solvant polymère polaire éventuellement plastifié par un liquide.

Le solvant liquide est de préférence un solvant organique liquide aprotique polaire choisi par exemple parmi les éthers linéaires et les éthers cycliques, les esters, les nitriles, les dérivés nitrés, les amides, les sulfones, les sulfolanes, les alkylsulfamides et les hydrocarbures partiellement hydrogénés. Les solvants particulièrement préférés sont le diéthyléther, le diméthoxyéthane, le glyme, le tétrahydrofurane, le dioxane, le diméthyltétrahydrofurane, le formiate de méthyle ou d'éthyle, le carbonate de propylène ou d'éthylène, les carbonates d'alkyle (notamment le carbonate de diméthyle, le carbonate de diéthyle et le carbonate de méthylpropyle), les butyrolactones, l'acétonitrile, le benzonitrile, le nitrométhane, le nitrobenzène, la diméthylformamide, la diéthylformamide, la N-méthylpyrrolidone, la diméthylsulfone, la tétraméthylène sulfone, la tétraméthylène sulfone et les tétraalkylsulfonamides ayant de 5 à 10 atomes de carbone.

Le solvant polymère polaire peut être choisi parmi les polymères solvatants, réticulés ou non, portant ou non des groupes ioniques greffés. Un polymère solvatant est un polymère qui comporte des unités solvatantes contenant au moins un hétéroatome choisi parmi le soufre, l'oxygène, l'azote et le fluor. A titre d'exemple de polymères solvatants, on peut citer les polyéthers de structure linéaire, peigne ou à blocs, formant ou non un réseau, à base de poly(oxyde d'éthylène), ou les copolymères contenant le motif oxyde d'éthylène ou oxyde de propylène ou allylglycidyléther, les polyphosphazènes, les réseaux réticulés à base de polyéthylène glycol réticulé par des isocyanates ou les réseaux obtenus par polycondensation et portant des groupements qui permettent l'incorporation de groupements réticulables. On peut également citer les copolymères à blocs dans lesquels certains blocs portent des fonctions qui ont des propriétés rédox. Bien entendu, la liste ci-dessus n'est pas limitative, et tous les polymères présentant des propriétés solvatantes peuvent être utilisés.

Le solvant de l'électrolyte peut comprendre simultanément un solvant liquide aprotique choisi parmi les solvants liquides aprotiques cités ci-dessus et un solvant polymère polaire comprenant des unités contenant au moins un hétéroatome choisi parmi le soufre, l'azote, l'oxygène et le fluor. A titre d'exemple d'un tel polymère polaire, on peut citer les polymères qui contiennent principalement de unités dérivées de l'acrylonitrile, du fluorure de vinylidène, de la N-vinylpyrrolidone ou du méthacrylate de méthyle. La proportion de liquide aprotique dans le solvant peut varier de 2% (correspondant à un solvant plastifié) à 98% (correspondant à un solvant gélifié).

Le sel de sodium est choisi parmi les sels de sodium d'acides forts, tels que par exemple NaClO₄, NaBF₄, NaPF₆, et les sels de sodium ayant un anion perfluoroalcanesulfonate, bis(perfluoroalkylsulfonyl) imides, bis(perfluoroalkyl-sulfonyl) méthane ou tris(perfluoroalkylsulfonyl)méthane. NaClO₄, NaPF₆ et NaFSI sont particulièrement préférés.

L'utilisation d'un électrolyte liquide pour l'élaboration in situ du matériau d'électrode NxTMO est particulièrement préférée.

Dans un 1^{er} mode de réalisation du procédé d'élaboration de la matière active d'électrode selon l'invention, l'électrode de travail portant l'oxyde précurseur (B) forme la cathode, et la contre électrode est une électrode de sodium qui fonctionne en tant qu'anode. Le matériau de cathode est enrichi en sodium à la fin de la 1^{ère} décharge de la cellule électrochimique, effectuée par application d'un courant réducteur. L'insertion d'ions Na⁺ commence à 0,5 V (Na⁺/Na⁰) et elle est complète à 0,05 V. La décharge complète correspond à l'insertion de 3 ions Na⁺ dans le composé NMTO.

Dans un 2^{ème} mode de réalisation, l'électrode de travail portant l'oxyde précurseur (B) forme l'anode, la contre-électrode fonctionne en cathode et elle contient un matériau capable de libérer des ions Na⁺ à un potentiel supérieur à celui de l'oxyde précurseur (B) par exemple Na_{0,44}MnO₂. Le matériau d'anode est enrichi en sodium à la fin de la 1^{ère} charge de la cellule électrochimique. L'insertion d'ions Na⁺ commence à 0,5 V (Na⁺/Na⁰) et elle est complète à 0,05 V. La charge complète correspond à l'insertion de 3 ions Na⁺ dans l'oxyde précurseur (B). Le matériau de la contre-électrode peut être choisi parmi les composés répondant à la formule NayMnO₂, 0,4≤y≤1 (par exemple Na_{0,44}MnO₂ ou Na_{0,7}MnO₂), Na_{z}CoO₂ (0,4≤z≤ 1) et Na₂FePO₄F.

Dans ces deux modes de réalisation, on obtient une électrode apte à fonctionner en tant qu'anode dans une batterie aux ions sodium. Si l'électrode de l'invention est préparée selon le 1^{er} mode de réalisation, la contre-électrode de sodium doit être remplacée par une électrode fonctionnant à un potentiel supérieur à celui de l'anode.

Dans le 2^{ème} mode de réalisation, l'électrode portant l'oxyde précurseur (B) fonctionne dès l'origine en tant qu'anode. La cellule électrochimique utilisée pour l'élaboration de l'électrode négative peut fonctionner comme une batterie "utile". Il est cependant préférable de remplacer, après le premier cycle, la contre-électrode par une électrode contenant un matériau d'insertion des ions sodium riche en sodium, afin de ne pas limiter dès l'origine la capacité de la batterie.

Lors de la mise en oeuvre du procédé de l'invention, l'application d'un courant réducteur à l'oxyde précurseur (B) présent dans l'électrode de travail provoque l'insertion d'ions sodium dans ledit matériau, et la modification du degré d'oxydation des éléments T et M présent.

Par exemple, si l'oxyde précurseur (B) est Na₂Ti₃O₇, Ti est initialement au degré d'oxydation IV. L'application d'un courant réducteur provoque l'insertion d'ions Na⁺ et la transformation de Ti(IV) en Ti(III) dans la proportion requise pour maintenir la neutralité électronique de l'oxyde. La matière active d'électrode négative obtenue répond à la formule NaₓTi(IV)ₐTi(III)_{b}O₇. Si x=5, la matière active NxTMO répond à la formule Na₅Ti(III)₃O₇.

Lorsque l'oxyde précurseur (B) contient Nb, il est préférable que la teneur x' en sodium soit inférieure à 2. L'application d'un courant réducteur provoque l'insertion d'ions Na⁺, et la réduction concomitante de Ti(IV) en Ti(III), puis la réduction de Nb(V) en Nb(IV). Lorsque la réduction est totale, le composé NxTMO répond à la formule NaₓTi(III)_{b}Nb_{c}O₇. Par exemple, pour b=1 et c=2, x est 3 ; pour b=2 et c=1, x est 4. Pour b=2,5 et c=0,5, x est 4,5.

Lorsque l'oxyde précurseur (B) contient V, l'application d'un courant réducteur provoque l'insertion d'ions Na⁺, la transformation de Ti(IV) en Ti(III) et de V(IV) en V(III) Lorsque la réduction est totale, x = 5, et le composé NxTMO répond à la formule Na₅Ti(III)_{3-c}V_{c}O₇.

Une batterie selon l'invention comprend au moins une cellule constituée par une électrode négative et une électrode positive séparées par un électrolyte.

L'électrode négative d'une batterie selon l'invention comprend un matériau d'électrode contenant NxTMO, éventuellement un agent de conduction ionique, et/ou éventuellement un liant. Le matériau d'électrode est porté par un collecteur de courant, qui peut être constitué par un matériau conducteur, en particulier par un matériau métallique qui peut être choisi par exemple parmi le cuivre, l'aluminium, un acier, et le fer. Un avantage de l'électrode négative selon l'invention, qui fonctionne par insertion réversible d'ions sodium, est que le collecteur peut être constitué par l'aluminium, du fait que le sodium ne forme pas d'alliage avec l'aluminium, contrairement au lithium.

Un matériau d'électrode négative selon l'invention contient de préférence :
- au moins 60% en poids de NxTMO ;
- de 0 à 30 % en poids d'agent de conductivité électronique ;
- de 0 à 30% en poids de liant polymère.

L'électrode positive d'une batterie selon l'invention comprend un matériau capable d'insérer réversiblement des ions Na⁺ à un potentiel supérieur au potentiel de fonctionnement de l'électrode négative, éventuellement un agent de conduction ionique, et éventuellement un liant. Le matériau est porté par un collecteur de courant qui peut être constitué par un matériau conducteur, en particulier par un matériau métallique qui peut être choisi par exemple parmi l'aluminium, un acier, et le fer. A titre d'exemple de matière active d'électrode positive, on peut citer NayM'O₂, 0,4≤y≤1, M' étant Mn ou Co (par exemple Na_{0,44}MnO₂ ou Na_{0,7}MnO₂). On peut citer en outre Na₂FePO₄F, Na₂CoPO₄F, NaFeSO₄F, NaCoSO₄F, NaNiSO₄F et leurs solutions solides Na(Z_{1-b}Mn_{b})SO₄F dans lesquels Z est Fe, Co ou Ni, b≤0,2.

Dans une batterie selon l'invention dans laquelle la matière active de l'électrode négative est NxTMO, l'électrolyte peut être choisi parmi ceux mentionnés précédemment pour la cellule électrochimique dans laquelle l'oxyde NxTMO est préparé.

Dans un mode de réalisation particulier, chacune des électrodes d'une batterie selon l'invention est constituée par un film mince. Lorsque l'électrolyte est un électrolyte solide polymère, il est également sous forme de film mince. Lorsque l'électrolyte est un électrolyte liquide, ledit liquide imprègne un séparateur sous forme d'un film mince. Par "film mince", on entend un film ayant une épaisseur de l'ordre de 100 à 300 µm. Une batterie selon l'invention peut être constituée par une cellule électrochimique unique comprenant deux électrodes séparées par un électrolyte, par plusieurs cellules assemblées en série, par plusieurs cellules assemblées en parallèle, ou par une combinaison des deux types d'assemblage.

La présente invention est décrite plus en détails par les exemples de réalisation ci-après, auxquels elle n'est cependant pas limitée.

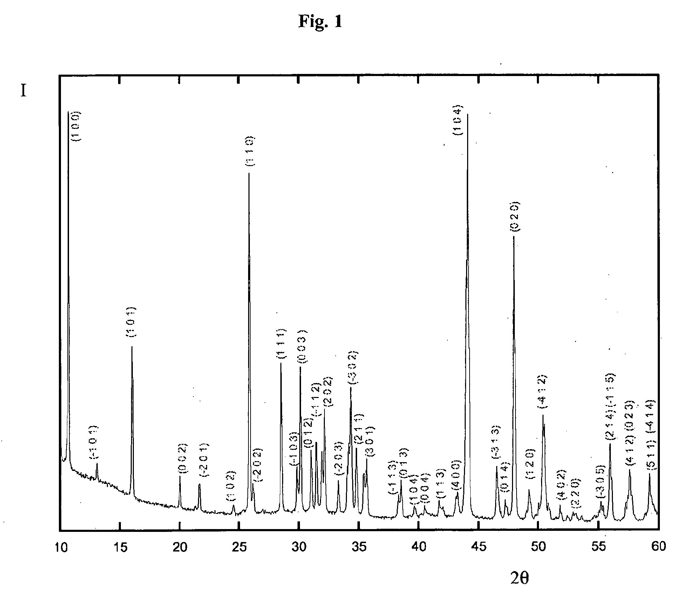

L'oxyde précurseur Na₂Ti₃O₇ utilisé dans les différents exemples a été préparé par un procédé décrit notamment dans K. Chiba, et al, précité. On a mélangé 0,3274 g de Na₂CO₃ et 0,6726 g d'anatase TiO₂, dans un broyeur à billes pendant 1 h, puis on a soumis le mélange à un traitement thermique à 800°C pendant 40 h, en effectuant un broyage intermédiaire après 20 h. Le diagramme de diffraction des rayons X du produit obtenu est représenté sur la figure 1. L'intensité I (en unités arbitraires) est donnée en fonction de l'angle de diffraction 2θ (en degrés), par rapport à la raie Kα du cuivre. Le diagramme confirme la structure et les paramètres de maille publiés par Andersson and Wadsley [Acta Cryst. 14(12) (1961) 1245], à savoir :
- structure monoclinique, groupe d'espace P1 21/m 1 ;
- Paramètres de maille a= 8,57 Å, b = 3,80Å, c= 9,13Å, ß= 101,6°.

Le matériau de cathode Na_{0,44}MnO₂ a été préparé selon le procédé décrit par Sauvage et al., Inorg. Chem. 46(8) (2007) 3289]. On a mélangé 1,184 g de MnCO₃ et 0,207 g de Na₂CO₃ dans un broyeur à billes pendant 30 min, puis on a soumis le mélange à un traitement thermique à 300°C pendant 8 h, puis à 800°C pendant 10 h en effectuant un broyage intermédiaire après 5 h.

### Exemple 1

### Préparation de NaₓTi₃O₇, contre-électrode en sodium / NaClO₄ / poudre

Dans un broyeur à billes, on a mélangé pendant 30 minutes 0,3 g de Na₂Ti₃O₇ et 0,1 g de noir de carbone, puis on a déposé le mélange sur une feuille de cuivre pour obtenir une électrode. On a monté l'électrode ainsi obtenue dans une cellule électrochimique dans laquelle la contre-électrode est constitué par du sodium métal et l'électrolyte est une solution 1 M de NaClO₄ dans le carbonate de propylène. On a scellé la cellule puis on lui a appliqué un courant réducteur correspondant à une vitesse de C/25.

On a constaté que l'insertion d'ions Na⁺ dans l'oxyde Na₂Ti₃O₇ commence à environ 0,5 V vs. Na⁺/Na⁰, après que le carbone ait réagi avec des ions Na⁺ aux potentiels plus élevés. La formation de Na₅Ti₃O₇ est complète à environ 0,05 V vs. Na⁺/Na⁰.

On a ensuite inversé le sens du courant appliqué à la cellule électrochimique pour provoquer la désinsertion d'ions Na⁺ insérés sous l'effet du courant réducteur.

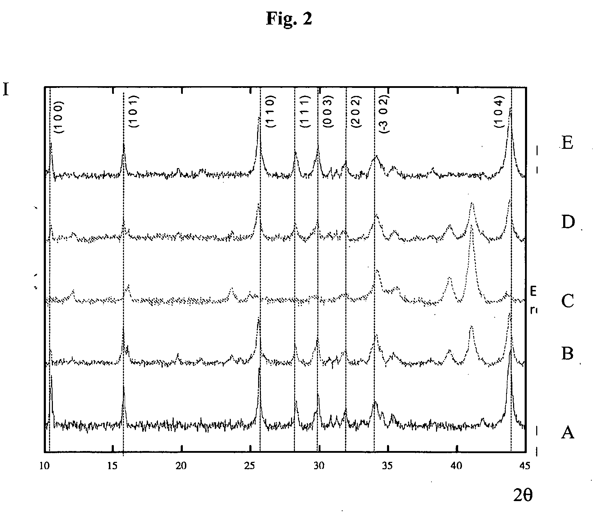

Le matériau formé sur l'électrode de travail au cours du 1^{er} cycle charge/décharge a été soumis à une diffraction des rayons X, à divers stade du cycle charge/décharge. Les diagrammes obtenus sont représentés sur la figure 2. L'intensité I (en unités arbitraires) est donnée en fonction de l'angle de diffraction 2θ en degrés, par rapport à la raie Kα du cuivre. Sur la figure 2, les courbes identifiées par A, B, C, D et E représentent le diagramme de diffraction des rayons X respectivement du composé Na₂Ti₃O initial, du composé Na₂₊ₓTi₃O₇ avec un taux d'insertion x intermédiaire d'ions Na⁺ inséré, le composé Na₂₊ₓTi₃O₇ avec le taux d'insertion maximum, le composé Na₂₊ₓTi₃O₇ après désinsertion partielle de Na⁺, et le composé Na₂Ti₃O proche de son état initial. Ces courbes montrent le caractère parfaitement réversible de l'insertion de Na⁺ dans le composé Na₂Ti₃O₇. L'inversion du courant provoque la réoxydation du composé en Na₂Ti₃O₇.

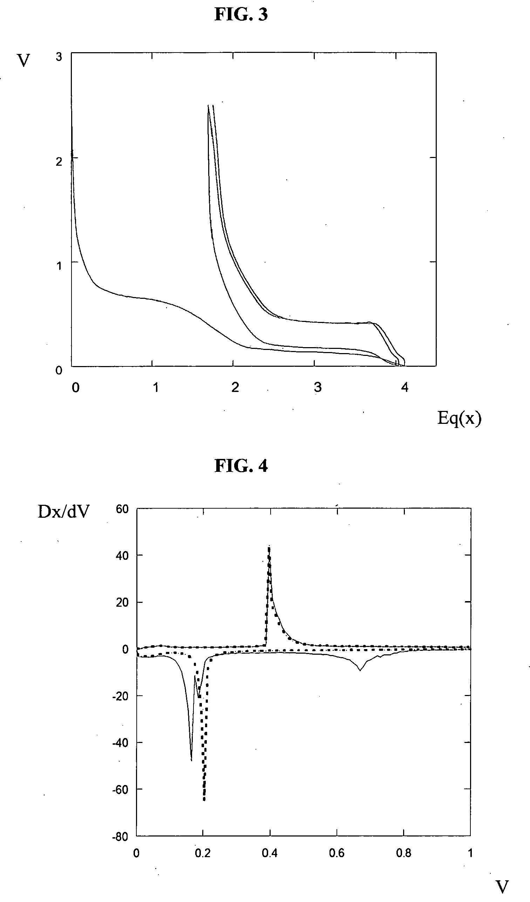

La figure 3 représente la variation de potentiel V (en Volts vs Na⁺/Na) en fonction de l'équivalent du nombre x d'ions Na⁺ insérés [Eq(x)] au cours des deux premiers cycles charge/décharge, et la figure 4 représente la dérivée dx/dV correspondante en fonction du potentiel V en volts. La figure 3 montre un phénomène irréversible lors du 1^{er} cycle. Ce phénomène correspond à la réaction du carbone ajouté au matériau d'électrode en tant qu'agent de conductivité électronique.

Lorsque le matériau composite Na₂Ti₃O₇ + carbone de l'électrode de travail est soumis à un courant réducteur lors de la première décharge, il réagit avec 5 sodium. Dans un premier temps, 2 ions sodium réagissent de façon irréversible avec le carbone (notamment par absorption de surfaces). Ensuite, des ions sodium s'insèrent dans la structure Ti₃O₇. L'insertion de chaque ion sodium provoque la réduction d'un atome Ti(IV) en Ti(III). On peut donc insérer au maximum 3 ions sodium dans le composé Na₂Ti₃O₇.

Ce fait a été confirmé par une expérience effectuée dans les mêmes conditions en utilisant une cellule dans laquelle le matériau de l'électrode de travail contient uniquement du carbone. La figure 4 représente la variation de potentiel en fonction de l'équivalent d'ions Na⁺ consommés par application d'un courant réducteur à une cellule électrochimique qui ne diffère de celle décrite ci-dessus que par le fait que l'électrode de travail ne contient pas l'oxyde Na₂Ti₃O₇.

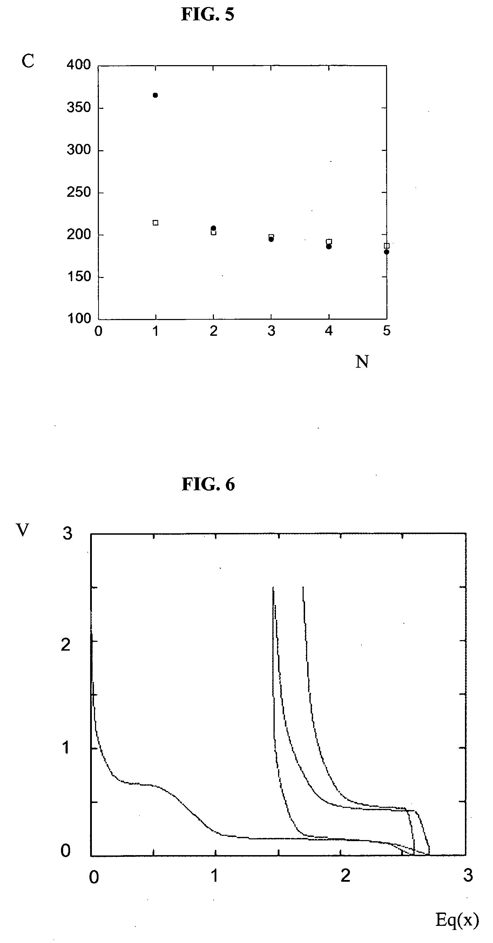

La figure 5 représente l'évolution de la capacité C (en mAh/g) en fonction du nombre de cycles N, pour la cellule électrochimique du présent exemple, cyclée à un taux de C/25. Pour un cycle donné, la capacité à la charge est représentée par □, et la capacité à la décharge est représentée par ●. Cette figure montre que la capacité est stable à environ 175 mAh/g au 5^{ème} cycle, tant à la charge qu'à la décharge.

### Exemple 2

### Préparation de Na₂₊ₓTi₃O₇, contre-électrode en sodium / NaFSI / poudre

On a reproduit le mode opératoire de l'exemple 1, mais en remplaçant le broyeur à billes par un mortier et en utilisant le sel NaFSI dans l'électrolyte, au lieu de NaClO₄.

La figure 6 représente la variation de potentiel V (en Volts vs Na⁺/Na) en fonction de l'équivalent du nombre x d'ions Na⁺ insérés [Eq(x)] au cours des deux premiers cycles charge/décharge. La capacité obtenue est inférieure à celle de l'exemple précédent, vraisemblablement parce que le mélange a été préparé dans des conditions moins aptes à assurer un mélange à l'échelle atomique.

### Exemple 3

### Préparation de Na₂₊ₓTi₃O₇, contre-électrode en sodium / NaClO₄ / liant

On a préparé une électrode à partir d'un mélange de 0,355 g de Na₂Ti₃O₇, 0,04 g du noir de carbone, 0,105 g de PVDF et 0.01 g de dibutylphtalate (en tant que plastifiant). On a broyé ce mélange dans un mortier, puis on a ajouté 10 ml d'acétone. La pâte ainsi obtenue a été agitée durant une nuit, puis enduite sur une plaque de verre. Après 15 minutes, l'acétone s'est évaporé et l'on obtient un film plastique. On trempe ledit film dans l'éther pour éliminer le plastifiant, puis on le chauffe à 80°C en boîte à gants sous atmosphère sèche pour éliminer l'eau. Le film sec obtenu peut être utilisé comme électrode.

On a monté l'électrode plastique ainsi obtenue dans une cellule électrochimique dans laquelle la contre-électrode est constitué par du sodium métal et l'électrolyte est une solution 1 M de NaClO₄ dans le carbonate de propylène. On a scellé la cellule puis on a appliqué un courant réducteur sur l'électrode de travail correspondant à une vitesse de C/25.

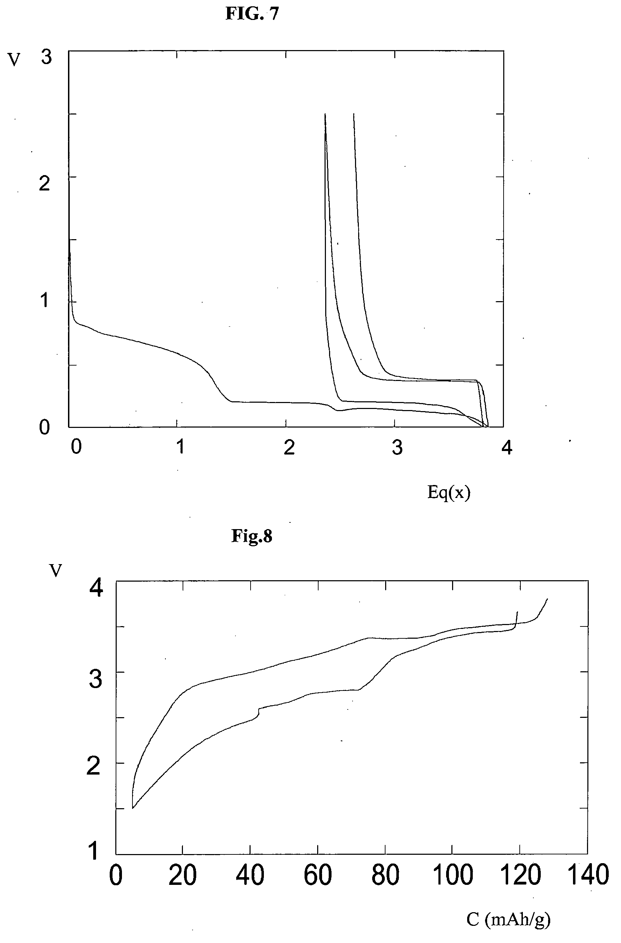

La figure 7 représente la variation de potentiel V (en Volts vs Na⁺/Na) en fonction de l'équivalent du nombre x d'ions Na⁺ insérés [Eq(x)] au cours des deux premiers cycles charge/décharge.

### Exemple 4

### Utilisation de Na₂₊ₓTi₃O₇, comme négative, avec une positive en Na_{0,44}MnO₂ / liant

On a préparé une électrode contenant NaₓTi₃O₇ selon le mode opératoire de l'exemple 3. On a préparé une électrode à partir d'un mélange de 0,71 g de Na_{0,44}MnO₂, 0,08 g du noir de carbone, 0,210 g de PVDF et 0,02 g de dibutylphtalate (en tant que plastifiant). On a broyé ce mélange dans un mortier, puis on a ajouté 20 ml d'acétone. La pâte ainsi obtenue a été agitée durant une nuit, puis enduite sur une plaque de verre. Après un traitement similaire à celui de l'exemple 3, on obtient une électrode plastique.

On a élaboré une cellule électrochimique en assemblant les deux électrodes et en utilisant comme électrolyte une solution 1 M de NaClO₄ dans le carbonate de propylène. On a scellé la cellule, puis on l'a soumise à un cyclage en appliquant un courant correspondant à une vitesse de C/25.

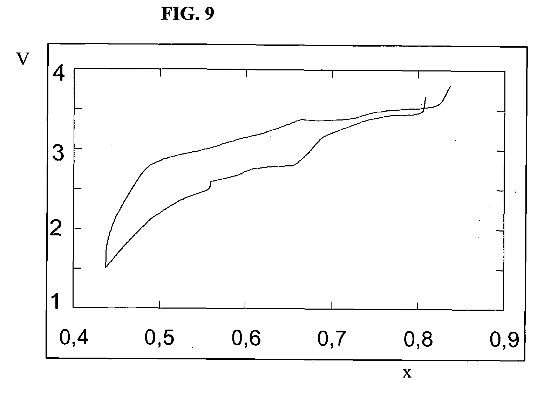

Pour le deuxième cycle, la Figure 8 représente la relation entre la capacité C (en mAh/g) de la cellule et le voltage V (en volts vs Na⁺/Na) et la figure 9 représente la relation entre la teneur x en sodium dans l'électrode positive et le voltage V.

## Revendications

1. Matière active d'électrode constituée par un oxyde de Na et de Ti dont la structure correspond à la structure en feuillets du composé Na₂Ti₃O₇, ledit oxyde répondant à la formule NaₓTi(IV)ₐTi(III)_{b}M_{c}O₇ (A) dans laquelle :
- x désigne le nombre d'ions Na⁺ insérés entres les feuillets, par unité structurale Ti₃O₇, 0<x≤5 ;
- Ti(IV) et Ti(III) représentent du titane respectivement au degré d'oxydation IV et III ;
- M représente un ou plusieurs éléments choisis parmi les métaux de transition 3d et les métaux de transition 4d ;
- les valeurs de x, a, b et c sont telles que le composé est électroniquement neutre compte tenu du degré d'oxydation du ou des éléments représentés par M, l'électroneutralité correspondant aux conditions suivantes : a+b+c=3, x+4a+3b+mc = 14, m étant la moyenne pondérée des degrés d'oxydation différents du même élément M ou des degrés d'oxydation de différents éléments M ;
- le rapport (a+b)/c est supérieur à 0,5 ;
- étant entendu que lorsque c = 0, ledit oxyde correspond à l'état partiellement réduit, à la formule NaₓTi(IV)ₐTi(III)_{b}O₇, dans laquelle 2<x≤5, a+b=3 et x+4a+3b = 14 ; et à l'état totalement réduit; à la formule Na₅Ti(III)₃O₇.

2. Matière active selon la revendication 1, dans laquelle l'oxyde (A) répond à l'une des formules suivantes :
- NaₓTi(IV)ₐTi(III)_{b}O₇, avec 2<x≤5, a+b=3, x+4a+3b = 14 ;
- NaₓTi(IV)ₐTi(III)_{b}Nb_{c}O₇, avec 0<x<5, a+b+c=3, x+4a+3b+mc = 14, m étant la moyenne pondérée des degrés d'oxydation Nb(V) et Nb(IV) ;
- NaₓTi(IV)ₐTi(III)_{b}V_{c}O₇, avec 0<x≤5, a+b+c=3, x+4a+3b+mc = 14, m étant la moyenne pondérée des degrés d'oxydation V(V) et V(III).

3. Electrode constituée par un collecteur de courant qui porte un matériau d'électrode, **caractérisé en ce que** le matériau d'électrode contient une matière active d'électrode selon l'une des revendications 1 à 2.

4. Electrode selon la revendication 3, **caractérisée en ce que** le matériau d'électrode contient en outre un agent de conductivité électronique, ou un liant ou les deux.

5. Electrode selon la revendication 4, **caractérisée en ce que** le matériau d'électrode contient :
- au moins 60 % en poids de matière active ;
- de 0 à 30% en poids d'agent de conductivité électronique ;
- de 0 à 30% en poids de liant polymère.

6. Electrode selon la revendication 4, **caractérisée en ce que** le matériau d'électrode contient un liant polymère, et il est sous forme d'un film porté par un collecteur de courant.

7. Electrode selon la revendication 4 **caractérisée en ce que** le matériau d'électrode est sous forme d'une couche de poudre compactée portée par un collecteur de courant.

8. Procédé d'élaboration d'une électrode contenant un matériau de formule NaₓTi(IV)ₐTi(III)_{b}M_{c}O₇ (A) selon la revendication 3, **caractérisé en ce qu'**il met en oeuvre un oxyde précurseur répondant à la formule Na_{x'}Ti(IV)ₐM_{c}O₇ (B), dans laquelle :
- x' désigne le nombre d'ions Na⁺ insérés entres les feuillets, par unité structurale Ti₃O₇, 0<x≤2 ;
- Ti(IV) représente du titane au degré d'oxydation IV ;
- M représente un ou plusieurs éléments choisis parmi les métaux de transition 3d et les métaux de transition 4d ;
- a'=a+b ;
- les valeurs de x', a', et c sont telles que le composé est électroniquement neutre compte tenu du degré d'oxydation du ou des éléments représentés par M;
- le rapport a'/c est supérieur à 0,5 ;
ledit procédé comprenant les étapes suivantes
- dépôt de l'oxyde précurseur (B) sur un collecteur de courant pour former une électrode de travail ;
- élaboration d'une contre-électrode comprenant un matériau capable de libérer des ions Na⁺;
- assemblage de l'électrode et de la contre-électrode pour former une cellule électrochimique dans laquelle l'électrolyte est une solution d'un sel de sodium ;
- application d'un courant réducteur à l'électrode de travail.

9. Procédé selon la revendication 8, **caractérisé en ce que** le matériau déposé sur le collecteur de courant de l'électrode de travail contient un agent de conduction électronique et/ou un liant.

10. Procédé selon la revendication 9, **caractérisé en ce que** le matériau déposé sur le collecteur de courant de l'électrode de travail contient:
- au moins 60% en poids d'oxyde précurseur (B) ;
- de 0 à 40 % en poids d'agent de conductivité électronique.

11. Procédé selon la revendication 9, **caractérisé en ce que** le matériau déposé sur le collecteur de courant de l'électrode de travail contient l'oxyde B, le liant, un solvant volatil, et éventuellement un agent de conduction ionique, le solvant volatil étant éliminé par séchage.

12. Procédé selon la revendication 9, **caractérisé en ce que** le matériau déposé sur le collecteur de courant de l'électrode de travail contient :
- au moins 50% en poids d'oxyde précurseur (B);
- de 0 à 25 % en poids d'agent de conductivité électronique ;
- de 0 à 25% en poids de liant polymère ;
- de 0 à 30% en poids de solvant volatil.

13. Procédé selon la revendication 8, **caractérisé en ce que** l'électrolyte est une solution d'un sel de sodium dans un solvant liquide.

14. Procédé selon la revendication 8, **caractérisé en ce que** la contre-électrode est une électrode de sodium métal, ou une électrode comprenant comme matière active un matériau capable de libérer des ions Na⁺ à un potentiel supérieur à celui de l'oxyde (B).

15. Batterie comprenant une anode, une cathode et un électrolyte, dans laquelle l'électrolyte est une solution d'un sel de sodium dans un solvant liquide éventuellement gélifié ou dans un solvant polymère solide, **caractérisé en ce que** l'anode est une électrode selon la revendication 4 et la cathode comprend un matériau déposé sur un collecteur de courant, ledit matériau comprenant un composé capable d'insérer des ions sodium de manière réversible à un potentiel supérieur à celui de l'anode.

## Patentansprüche

1. Wirkstoff für eine Elektrode, der von einem Oxid von Na und von Ti gebildet ist, dessen Struktur der Lagenstruktur der Verbindung Na₂Ti₃O₇ entspricht, wobei das Oxid der Formel NaₓTi(IV)ₐTi(III)_{b}M_{c}O₇ (A) entspricht, wobei:
- x die Anzahl der zwischen den Lagen eingefügten Ionen Na⁺ je Struktureinheit Ti₃O₇, 0 < x ≤ 5, bezeichnet,
- Ti(IV) und Ti(III) Titan jeweils mit dem Oxidationsgrad IV und III darstellen,
- M ein oder mehrere Elemente darstellt, die aus den Übergangsmetallen 3d und den Übergangsmetallen 4d ausgewählt sind,
- die Werte von x, a, b und c derart sind, dass die Verbindung unter Berücksichtigung des Oxidationsgrads des oder der von M dargestellten Elemente elektronisch neutral ist, wobei die Elektroneutralität den folgenden Bedingungen entspricht: a + b + c = 3, x + 4a + 3b + mc = 14, wobei m der gewichtete Durchschnitt der verschiedenen Oxidationsgrade desselben Elements M oder der Oxidationsgrade verschiedener Elemente M ist,
- das Verhältnis (a + b)/c größer als 0,5 ist,
- wobei es sich versteht, dass, wenn c = 0 ist, das Oxid im teilweise reduzierten Zustand der Formel NaₓTi(IV)ₐTi(III)_{b}O₇, wobei 2 < x ≤ 5, a + b = 3 und x + 4a + 3b = 14, und im vollständig reduzierten Zustand der Formel Na₅Ti(III)₃O₇ entspricht.

2. Wirkstoff nach Anspruch 1, wobei das Oxid (A) einer der folgenden Formeln entspricht:
- NaₓTi(IV)ₐTi(III)_{b}O₇ mit 2 < x < 5, a + b = 3, x + 4a + 3b = 14,
- NaₓTi(IV)ₐTi(III)_{b}Nb_{c}O₇ mit 0 < x < 5, a + b + c = 3, x + 4a + 3b +mc = 14, wobei m der gewichtete Durchschnitt der Oxidationsgrade Nb(V) und Nb(IV) ist,
- NaₓTi(IV)ₐTi(III)_{b}V_{c}O₇ mit 0 < x ≤ 5, a + b + c = 3, x + 4a + 3b + mc = 14, wobei m der gewichtete Durchschnitt der Oxidationsgrade V(V) und V(III) ist.

3. Elektrode, die von einem Stromsammler gebildet ist, der ein Elektrodenmaterial trägt, **dadurch gekennzeichnet, dass** das Elektrodenmaterial einen Wirkstoff für eine Elektrode nach einem der Ansprüche 1 bis 2 enthält.

4. Elektrode nach Anspruch 3, **dadurch gekennzeichnet, dass** das Elektrodenmaterial ferner ein elektronisches Leitfähigkeitsmittel oder ein Bindemittel oder beide enthält.

5. Elektrode nach Anspruch 4, **dadurch gekennzeichnet, dass** das Elektrodenmaterial enthält:
- mindestens 60 Gew.-% Wirkstoff,
- 0 bis 30 Gew.-% elektronisches Leitfähigkeitsmittel,
- 0 bis 30 Gew.-% Polymerbindemittel.

6. Elektrode nach Anspruch 4, **dadurch gekennzeichnet, dass** das Elektrodenmaterial ein Polymerbindemittel enthält und in Form einer Folie vorliegt, die von einem Stromsammler getragen wird.

7. Elektrode nach Anspruch 4, **dadurch gekennzeichnet, dass** das Elektrodenmaterial ein Polymerbindemittel enthält und in Form einer kompaktierten Pulverschicht vorliegt, die von einem Stromsammler getragen wird.

8. Herstellungsverfahren einer Elektrode, die einen Material der Formel NaₓTi(IV)ₐTi(III)_{b}M_{c}O₇ (A) nach Anspruch 3 enthält, **dadurch gekennzeichnet, dass** es ein Vorläuferoxid umsetzt, das der Formel NaₓTi(IV)ₐM_{c}O₇ (B) entspricht, wobei:
- x' die Anzahl der zwischen den Lagen eingefügten Ionen Na⁺ je Struktureinheit Ti₃O₇, 0 < x ≤2, bezeichnet,
- Ti(IV) Titan mit dem Oxidationsgrad IV darstellt,
- M ein oder mehrere Elemente darstellt, die aus den Übergangsmetallen 3d und den Übergangsmetallen 4d ausgewählt sind,
- a' = a + b,
- die Werte von x', a' und c derart sind, dass die Verbindung unter Berücksichtigung des Oxidationsgrads des oder der von M dargestellten Elemente elektronisch neutral ist,
- das Verhältnis a'/c größer als 0,5 ist,
wobei das Verfahren die folgenden Schritte umfasst:
- Aufbringen von Vorläuferoxid (B) auf einen Stromsammler, um eine Arbeitselektrode zu bilden,
- Herstellung einer Gegenelektrode, die ein Material umfasst, das imstande ist, Ionen Na⁺ freizusetzen,
- Verbindung der Elektrode und der Gegenelektrode, um eine elektrochemische Zelle zu bilden, in welcher der Elektrolyt eine Lösung eines Natriumsalzes ist,
- Anlegen eines Reduzierstroms an die Arbeitselektrode.

9. Verfahren nach Anspruch 8, **dadurch gekennzeichnet, dass** das auf den Stromsammler der Arbeitselektrode aufgebrachte Material ein elektronisches Leitfähigkeits- und/oder ein Bindemittel enthält.

10. Verfahren nach Anspruch 9, **dadurch gekennzeichnet, dass** das auf den Stromsammler der Arbeitselektrode aufgebrachte Material enthält:
- mindestens 60 Gew.-% Vorläuferoxid (B),
- 0 bis 40 Gew.-% elektronisches Leitfähigkeitsmittel.

11. Verfahren nach Anspruch 9, **dadurch gekennzeichnet, dass** das auf den Stromsammler der Arbeitselektrode aufgebrachte Material Oxid B, das Bindemittel, ein flüchtiges Lösungsmittel und eventuell ein lonenleitmittel enthält, wobei das flüchtige Lösungsmittel durch Trocknen entfernt ist.

12. Verfahren nach Anspruch 9, **dadurch gekennzeichnet, dass** das auf den Stromsammler der Arbeitselektrode aufgebrachte Material enthält:
- mindestens 50 Gew.-% Vorläuferoxid (B),
- 0 bis 25 Gew.-% elektronisches Leitfähigkeitsmittel.
- 0 bis 25 Gew.-% Polymerbindemittel,
- 0 bis 30 Gew.-% flüchtiges Lösungsmittel.

13. Verfahren nach Anspruch 8, **dadurch gekennzeichnet, dass** der Elektrolyt eine Lösung eines Natriumsalzes in einem flüssigen Lösungsmittel ist.

14. Verfahren nach Anspruch 8, **dadurch gekennzeichnet, dass** die Gegenelektrode eine Natriummetallelektrode oder eine Elektrode ist, die als Wirkstoff ein Material enthält, das imstande ist, Ionen Na⁺ mit einem höheren Potential als das des Oxids (B) freizusetzen.

15. Batterie, die eine Anode, eine Kathode und einen Elektrolyt umfasst, wobei der Elektrolyt eine Lösung eines Natriumsalzes in einem flüssigen, eventuell gelierten Lösungsmittel oder in einem festen Polymerlösungsmittel ist, **dadurch gekennzeichnet, dass** die Anode eine Elektrode nach Anspruch 4 ist und die Kathode ein auf den Stromsammler aufgebrachtes Material umfasst, wobei das Material eine Verbindung umfasst, die imstande ist, Natriumionen mit einem höheren Potential als die Anode reversibel einzufügen.

## Claims

1. Active electrode material composed of an oxide of Na and Ti with a structure corresponding to the layered structure of the compound Na₂Ti₃O₇, said oxide conforming to the formula NaₓTi(IV)ₐTi(III)_{b}M_{c}O₇ (A), in which:
- x denotes the number of Na⁺ ions inserted between the layers, per Ti₃O₇ structural unit, with 0<x≤5;
- Ti(IV) and Ti(III) represent titanium in the oxidation states IV and III, respectively;
- M represents one or more elements selected from 3d transition metals and 4d transition metals;
- the values of x, a, b and c are such that the compound is electronically neutral in view of the oxidation state of the element or elements represented by M, the electroneutrality corresponding to the following conditions: a+b+c = 3, x+4a+3b+mc = 14, m being the weighted average of the different oxidation states of the same element M or of the oxidation states of different elements M;
- the ratio (a+b)/c is greater than 0.5;
- it being understood that when c = 0, said oxide (A) corresponds, in the partially reduced state, to the formula NaₓTi(IV)ₐTi(III)_{b}O₇, with 2<x≤5, a+b = 3, x+4a+3b = 14; and in the completely reduced state, to the formula Na₅Ti(III)₃O₇.

2. Active material according to Claim 1, wherein the oxide (A) conforms to one of the following formulae:
- NaₓTi(IV)ₐTi(III)_{b}O₇, with 2<x≤5, a+b = 3, x+4a+3b = 14;
- NaₓTi(IV)ₐTi(III)_{b}Nb_{c}O₇, with 0<x<5, a+b+c = 3, x+4a+3b+mc = 14, m being the weighted average of the oxidation states Nb(V) and Nb(IV);
- NaₓTi(IV)ₐTi(III)_{b}V_{c}O₇, with 0<x≤5, a+b+c = 3, x+4a+3b+mc = 14, m being the weighted average of the oxidation states V(V) and V(III).

3. Electrode composed of a current collector which carries an electrode material, **characterized in that** the electrode material comprises an active electrode material according to either of Claims 1 and 2.

4. Electrode according to Claim 3, **characterized in that** the electrode material further comprises an electron conductivity agent or a binder, or both.

5. Electrode according to Claim 4, **characterized in that** the electrode material comprises:
- at least 60% by weight of active material;
- from 0% to 30% by weight of electron conductivity agent;
- from 0% to 30% by weight of polymeric binder.

6. Electrode according to Claim 4, **characterized in that** the electrode material comprises a polymeric binder, and it is in the form of a film carried by a current collector.

7. Electrode according to Claim 4, **characterized in that** the electrode material is in the form of a compacted powder layer carried by a current collector.

8. Method for producing an electrode comprising a material of formula NaₓTi(IV)ₐTi(III)_{b}M_{c}O₇ (A) according to Claim 3, **characterized in that** it employs a precursor oxide conforming to the formula NaₓTi(IV)ₐM_{c}O₇ (B), in which:
- x' denotes the number of Na⁺ ions inserted between the layers, per Ti₃O₇ structural unit, with 0<x≤2;
- Ti(IV) represents titanium in the oxidation state IV;
- M represents one or more elements selected from 3d transition metals and 4d transition metals;
- a' = a+b;
- the values of x', a', and c are such that the compound is electronically neutral in view of the oxidation state of the element or elements represented by M;
- the ratio a'/c is greater than 0.5;
said method comprising the following steps:
- applying the precursor oxide (B) to a current collector, to form a working electrode;
- producing a counter-electrode comprising a material capable of liberating Na⁺ ions;
- assembling the electrode and the counter-electrode to form an electrochemical cell in which the electrolyte is a solution of a sodium salt;
- applying a reducing current to the working electrode.

9. Method according to Claim 8, **characterized in that** the material applied to the current collector of the working electrode comprises an electron conduction agent and/or a binder.

10. Method according to Claim 9, **characterized in that** the material applied to the current collector of the working electrode comprises:
- at least 60% by weight of precursor oxide (B);
- from 0% to 40% by weight of electron conductivity agent.

11. Method according to Claim 9, **characterized in that** the material applied to the current collector of the working electrode comprises the oxide B, the binder, a volatile solvent, and optionally an ion conduction agent, the volatile solvent being removed by drying.

12. Method according to Claim 9, **characterized in that** the material applied to the current collector of the working electrode comprises:
- at least 50% by weight of precursor oxide (B);
- from 0% to 25% by weight of electron conductivity agent;
- from 0% to 25% by weight of polymeric binder;
- from 0% to 30% by weight of volatile solvent.

13. Method according to Claim 8, **characterized in that** the electrolyte is a solution of a sodium salt in a liquid solvent.

14. Method according to Claim 8, **characterized in that** the counter-electrode is a sodium metal electrode or an electrode comprising as active material a material capable of releasing Na⁺ ions at a potential greater than that of the oxide (B).

15. Battery comprising an anode, a cathode and an electrolyte, wherein the electrolyte is a solution of a sodium salt in an optionally gelled liquid solvent or in a solid polymeric solvent, **characterized in that** the anode is an electrode according to Claim 4 and the cathode comprises a material applied to a current collector, said material comprising a compound capable of reversible insertion of sodium ions at a potential greater than that of the anode.
